# EUROPÄISCHE PATENTSCHRIFT

(11) **EP 2 467 592 B1**
(45) Veröffentlichungstag und Bekanntmachung des Hinweises auf die Patenterteilung: **14.08.2013**
(21) Anmeldenummer: 10728193.3
(22) Anmeldetag: 23.06.2010
(51) Int. Cl.: F02M 59/48, F04B 1/04, F04B 53/16

(54) **KRAFTSTOFFHOCHDRUCKPUMPE**
HIGH PRESSURE FUEL PUMP
POMPE DE CARBURANT HAUTE PRESSION

(30) Priorität: 21.08.2009 DE 102009028795
(43) Veröffentlichungstag der Anmeldung: 27.06.2012
(73) Patentinhaber: Robert Bosch GmbH, 70442 Stuttgart (DE)
(72) Erfinder: GENTE, Arnold, 70469 Stuttgart (DE); ALEKER, Jochen, 70499 Stuttgart (DE)
(86) Internationale Anmeldenummer: PCT/EP2010/058914
(87) Internationale Veröffentlichungsnummer: WO 2011/020635

(56) Entgegenhaltungen:
- EP-A2- 1 045 142
- EP-A2- 1 818 539
- DE-A1-102008 007 224

## Beschreibung

### Stand der Technik

Die Erfindung betrifft eine Kraftstoffhochdruckpumpe einer Brennkraftmaschine mit den Merkmalen des Oberbegriffes des Anspruchs 1.

Derartige Hochdruckpumpen sind aus dem Stand der Technik hinlänglich bekannt. Sie werden in Kraftfahrzeugen insbesondere dazu eingesetzt, Kraftstoff, vorzugsweise Dieselkraftstoff, in einen Hochdruckspeicher zu fördern, von wo aus der Kraftstoff unter hohem Druck in den Brennraum der Brennkraftmaschine eingespritzt wird. Hierzu weist eine solche Hochdruckpumpe eine Antriebswelle mit einem Nocken- oder Exzentertrieb auf, mittels derer ein Pumpenkolben wenigstens eines Pumpenelementes zu einer Hubbewegung angetrieben wird. Im Saughub des Pumpenkolbens wird Kraftstoff aus einem Niederdruckbereich angesaugt und im Förderhub des Pumpenkolbens im Pumpenarbeitsraum verdichtet, um dann unter hohem Druck stehend dem Hochdruckspeicher zugeführt zu werden.

Aufgrund der hohen Förderdrücke besteht bei derartigen Pumpen regelmäßig das Problem, dass große Kräfte, und zwar radial als auch axial wirksame Kräfte in Bezug auf die Antriebswellenlängsachse, auf die Antriebswelle einwirken, welche durch die Lageranordnungen der Antriebswelle aufgenommen werden müssen. Um bei Auftreten hoher Radialkräfte und einer damit einhergehenden Schrägstellung der Antriebswelle hohe Kantenpressungen in den Randbereichen der Lageranordnungen zu verhindern wird beispielsweise in der Offenlegungsschrift DE 10 2006 051 332 A1 vorgeschlagen, einen in einer Lagerbohrung aufgenommenen Lagerwellenabschnitt der Antriebswelle oder die Kontur der Lagerbohrung ballig auszuführen, so dass in der Lagermitte eine geringere Lagerluft als in den Lagerrandbereichen verbleibt. Somit kann eine gewisse Schrägstellung der Antriebswelle aufgrund einwirkender Radialkräfte besser toleriert werden. Zur Aufnahme der Axialkräfte ist die Lageranordnung in einem Flanschteil ausgebildet, das über wenigstens eine Schraubverbindung formschlüssig mit dem Gehäuse der Hochdruckpumpe verbunden ist.

Aus der DE 10 2008 007 224 A1 geht ferner eine Pumpenanordnung mit wenigstens drei gekoppelten Gehäusemodulen hervor, wobei die Kopplung über eine Schraub- und Pressverbindung erfolgt.

Ausgehend von einer gattungsgemäßen Hochdruckpumpe der vorstehend genannten Art ist es Aufgabe der vorliegenden Erfindung, eine Hochdruckpumpe mit einer verbesserten Lageranordnung der Antriebswelle zu schaffen. Insbesondere soll die Hochdruckpumpe einfach und damit kostengünstig herzustellen sein.

### Offenbarung der Erfindung

Zur Lösung der Aufgabe wird eine Hochdruckpumpe mit den Merkmalen des Anspruchs 1 vorgeschlagen. Vorteilhafte Weiterbildungen der Erfindung werden in den Unteransprüchen angegeben.

Die vorgeschlagene Kraftstoffhochdruckpumpe weist ein Pumpengehäuse auf, in dem zur Betätigung wenigstens eines im Pumpengehäuse angeordneten Pumpenelementes eine Antriebswelle mit einem Nocken- oder Exzentertrieb aufgenommen und drehbar um eine Antriebswellenlängsachse gelagert ist. Zur Aufnahme und drehbaren Lagerung der Antriebswelle umfasst das Pumpengehäuse ein Gehäuseteil mit einer Lagerbohrung. Das Gehäuseteil ist über eine reibschlüssige Pressverbindung mit dem Pumpengehäuse verbunden, wobei die reibschlüssige Pressverbindung dadurch ausgebildet wird, dass das Gehäuseteil wenigstens einen Abschnitt besitzt, der ein radiales Übermaß gegenüber einer Ausnehmung des Pumpengehäuses besitzt, in welche das Gehäuseteil eingesetzt ist. Dabei ist die Pressverbindung vorzugsweise derart ausgelegt, dass hierüber auch über die Antriebswelle eingeleitete Axialkräfte aufgenommen werden können. Eine Schraubverbindung ist damit entbehrlich, so dass die Befestigung des Gehäuseteils am Pumpengehäuse schraubenlos erfolgen kann. Auch die Ausbildung eines Flansches ist entbehrlich, so das insgesamt Material und damit Gewicht eingespart werden kann. Ferner entfällt die aufwendige Herstellung von Bohrungen zur Aufnahme der Befestigungsschrauben, so dass insgesamt die Herstellung vereinfacht und damit kostengünstiger gestaltet wird.

Erfindungsgemäß besitzt das Gehäuseteil zur Ausbildung der reibschlüssigen Pressverbindung einen ersten Abschnitt a und einen zweiten Abschnitt b mit radialem Übermaß gegenüber der Ausnehmung des Pumpengehäuses, so dass zwei Pressverbände zur reibschlüssigen Verbindung des Gehäuseteils mit dem Pumpengehäuse ausgebildet werden. Dabei sind der erste Abschnitt a und der zweite Abschnitt b in axialer Richtung bezogen auf die Antriebswellenlängsachse zueinander beabstandet angeordnet. Ein großer axialer Abstand ermöglicht eine Ausrichtung des Gehäuseteils über eine große Länge in axialer Richtung und gewährleistet somit die Koaxialtität des Gehäuseteils zum Pumpengehäuse. In entsprechender Weise ist der axiale Abstand daher bevorzugt möglichst groß gewählt.

Die reibschlüssige Verbindung des Gehäuseteils mit dem Pumpengehäuse über zwei axial zueinander beabstandete Pressverbände weist zudem den Vorteil auf, dass zwischen den beiden Abschnitten a und b mit radialem Übermaß ein als Rücklaufnut nutzbarer Ringraum ausgebildet werden kann. Erfindungsgemäß mündet in diesen Ringraum eine Rücklaufbohrung zur Rückführung der Lagerschmiermenge in den Systemrücklauf. Die Rücklaufbohrung kann als Radialbohrung oder schräg verlaufend in einem Wandungsbereich des Gehäuseteils ausgebildet sein. Ein Ringraum als Rücklaufnut, das heißt eine umlaufende Rücklaufnut, besitzt den Vorteil, dass auch bei einer unterschiedlichen Winkellage der Rücklaufbohrungen im Gehäuseteil und im Pumpengehäuse der Anschluss an den Systemrücklauf gewährleistet ist. Bevorzugt wird die umlaufende Rücklaufnut durch die weiter innen liegende Pressverbindung des Abschnitts a gegenüber dem Pumpeninnenraum abgedichtet. Dadurch kann auf die Anordnung eines Dichtringes verzichtet werden. Sollten dennoch Undichtigkeiten auftreten, sind keine schwerwiegenden Auswirkungen zu erwarten, da die Leckage pumpenintern erfolgt.

Vorzugsweise unterscheidet sich das radiale Übermaß des ersten Abschnitts a des Gehäuseteils gegenüber der Ausnehmung des Pumpengehäuses von dem radialen Übermaß des zweiten Abschnitts b. Weiterhin vorzugsweise ist das radiale Übermaß des zweiten Abschnitts b größer als das des ersten Abschnitts a gewählt. Durch eine entsprechende Ausbildung der Abschnitte a und b wird zum Einen eine ausreichende Pressverbindung in beiden Abschnitten sichergestellt, zum Anderen der Einpressvorgang erleichtert.

Vorteilhafterweise besitzt die Pressverbindung im Bereich des zweiten Abschnitts b ebenfalls eine Dichtfunktion. Bei Anwendungen mit geringen Anforderungen, das heißt geringen, auf die Antriebswelle einwirkenden Kräften, kann die Pressverbindung demnach einen Dichtring zur Abdichtung des Ringraumes gegenüber dem Außenraum ersetzen.

Vorzugsweise sind das radiale Übermaß und die axiale Erstreckung des Abschnitts a und/oder des Abschnitts b zur Herstellung einer Pressverbindung derart gewählt, dass die Mindestpresskraft > 5 kN beträgt und eine gängige Axialpresskraft von etwa 1 kN aufgenommen werden kann.

Aufgrund des Pressübermaßes kann es im Bereich der Pressverbindung zu einer unerwünschten Verformung der Lagerbohrung sowie hieran angrenzender Bauteile kommen. Zur Ausbildung eines Gleitlagers kann beispielsweise eine Gleitlagerbuchse in der Lagerbohrung aufgenommen sein, so dass das Pressübermaß eine Verformung der Lagerbuchse bewirken kann. Dadurch kann ggf. die Tragfähigkeit des Lagers herabgesetzt werden. Zur Vermeidung derartiger Verformungen ist daher bevorzugt im Pumpengehäuse im Bereich wenigstens einer Pressverbindung eine Ringnut vorgesehen, die eine elastische Verformung des Pumpengehäuses und damit eine Entkopplung im Bereich der Pressverbindung bewirkt. Somit sind hohe Haltekräfte ohne plastische Verformung angrenzender Bauteile und ohne Spannbildung im Pressbereich realisierbar. Aufgrund der Entkopplung kann die Presskraft sogar noch weiter angehoben werden.

Gemäß einer bevorzugten Ausführungsform ist die zur Entkopplung des Pumpengehäuses vorgesehene Ringnut vorzugsweise koaxial zur Ausnehmung des Pumpengehäuses angeordnet, in der das Gehäuseteil eingesetzt ist. Die Ringnut erstreckt sich von einer Stirnfläche des Pumpengehäuses aus im Wesentlichen axial und ist vorteilhafterweise mit einem kerbunempfindlichen Radius ausgestattet. Alternativ oder ergänzend kann auch in einer Stirnfläche des Gehäuseteils eine entsprechende Ringnut ausgebildet sein, um unerwünschten Verformungen entgegen zu wirken. Sofern die Anordnung einer Gleitlagerbuchse in der Lager bohrung des Gehäuseteils vorgesehen ist, kann diese zylinderförmig oder als Bundbuchse ausgebildet sein.

Kommt eine Ringnut zur Entkopplung des Pumpengehäuses zum Einsatz, ist vorzugsweise deren axiale Erstreckung größer als die axiale Erstreckung des jeweiligen Pressbereiches gewählt, zu deren Entlastung die Ringnut beiträgt. Das heißt, dass die axiale Erstreckung der Ringnut vorzugsweise größer als die axiale Erstreckung der Abschnitte a oder b mit radialem Übermaß gewählt ist. Dadurch kann eine ungleiche Flächenpressung in Längsrichtung vermieden werden. Wieterhin vorzugweise ist die axiale Erstreckung der Ringnut mindestens 20% größer als die axiale Erstreckung des jeweiligen Pressbereiches gewählt.

Gemäß einer bevorzugten Ausführungsform ist zur axialen Lagesicherung des Gehäuseteils innerhalb der Ausnehmung des Pumpengehäuses zusätzlich eine formschlüssige Verbindung des Gehäuseteils mit dem Pumpengehäuse vorgesehen. Die formschlüssige Verbindung kann beispielsweise durch wenigstens eine Schraube oder wenigstens einen Stift bewirkt werden. Vorzugsweise ist die wenigstens eine Schraube oder der wenigstens eine Stift senkrecht zur Antriebswellenlängsachse geführt. Alternativ kann zur Herstellung einer formschlüssigen Verbindung auch ein Spreng- oder Sicherungsring eingesetzt werden. Aufgrund der zusätzlichen formschlüssigen Verbindung ist die Hochdruckpumpe auch für Anwendungen mit besonders hohen Anforderungen geeignet.

Vorteilhafterweise bestehen das Gehäuseteil und das Pumpengehäuse aus dem gleichen Werkstoff, so dass das Gehäuseteil und das Pumpengehäuse die gleichen Werte hinsichtlich E-Modul und Temperaturausdehnungskoeffizient aufweisen. Ein betriebsbedingtes Lösen der wenigstens einen Pressverbindung kann damit weitestgehend ausgeschlossen werden. Eine zusätzliche formschlüssige Verbindung ist demnach in der Regel entbehrlich. Zudem bleibt eine etwaige Dichtfunktion in einem Pressbereich dauerhaft gewährleistet. Werden unterschiedliche Werkstoffe zur Herstellung des Gehäuseteils und des Pumpengehäuses verwendet, muss - insbesondere bei alleiniger Befestigung des Gehäuseteils am Pumpengehäuse über wenigstens eine Pressverbindung - sichergestellt sein, dass die Mindestpresskraft ausreicht, um die Haltefunktion übder den gesamten Bereich der Betriebstemperatur zu gewährleisten.

Ausführungsbeispiele der Erfindung werden nachfolgend anhand der Zeichnungen näher erläutert. Es zeigen:
Fig. 1 einen Teilschnitt durch eine bekannte Hochdruckpumpe im Bereich der Lagerung der Antriebswelle,
Fig. 2 einen Teilschnitt durch eine erfindungsgmäße Hochdruckpumpe mit vergrößerter Darstellung des Lagerbereiches und
Fig. 3 einen Teilschnitt durch eine alternative Ausführungsform einer erfindungsgemäßen Hochdruckpumpe mit vergrößerter Darstellung des Lagerbereiches.

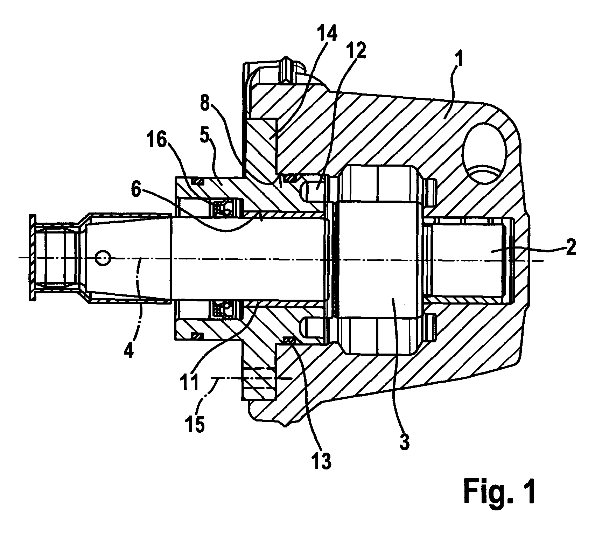

Die in der Fig 1 dargestellte und aus dem Stand der Technik bekannte Hochdruckpumpe umfasst ein Pumpengehäuse 1, in welches zur Aufnahme und drehbaren Lagerung einer Antriebswelle 2 um eine Antriebswellenlängsachse 4 ein flanschartig ausgebildetes Gehäuseteil 5 aufgenommen ist. Zur Ausbildung eines Gleitlagers ist in einer Lagerbohrung 6 des Gehäuseteils 5 eine Gleitlagerbuchse 11 eingesetzt. Die Antriebswelle 2 ist durch die Gleitlagerbuchse 11 hindurch geführt und endseitig in einer weiteren als Gleitlager ausgebildeten Lageranordnung im Pumpengehäuse 1 gehalten. Zwischen den beiden Gleitlagern weist die Antriebswelle 2 einen Nockentrieb 3 zur Betätigung eines Pumpenkolbens (nicht dargestellt) wenigstens eines Pumpenelementes (ebenfalls nicht dargestellt) zur Förderung von Kraftstoff auf.

Das Gehäuseteil 5 ist über seinen Flansch 14 axial am Pumpengehäuse 1 angeschlagen. Zur Befestigung wird der Flansch 14 über wenigstens eine Schraube 15 mit dem Pumpengehäuse verschraubt. Üblicherweise sind 4 oder 6 Schrauben 15 im gleichen Winkelabstand zueinander im Flansch 14 zur Befestigung des Gehäuseteils 5 angeordnet. Die Schrauben 15 bewirken eine formschlüssige Verbindung, durch welche über die Antriebswelle 2 eingeleitete Axialkräfte aufgenommen werden können. Über einen zylinderförmigen Ansatz am Flansch 14 ist das Gehäuseteil 5 zudem in radialer Richtung in einer Ausnehmung 8 des Pumpengehäuses 1 abgestützt.

Zwischen der Ausnehmung 8 des Pumpengehäuses 1 und dem Gehäuseteil 5 ist wenigstens ein Dichtring 13 angeordnet, der den Austritt einer gewissen Lagerschmiermenge verhindern soll. Eine entsprechende Funktion besitzt ein Wellendichtring 16, der den Lagerspalt zwischen der Antriebswelle 2 und dem Gehäuseteil 5 nach außen abdichtet.

De Weiteren ist in einer Stirnfläche des Gehäuseteils 5 eine Ringnut 12 ausgebildet, die eine gewisse elastische Verformbarkeit des Gehäuseteils 5 im Randbereich des Lagers gewährleistet. Die durch die Ringnut 12 bewirkte elastische Verformbarkeit ist insbesondere dann von Vorteil, wenn hohe Querkräfte aus dem Nockentrieb 3 auf die Antriebswelle 2 wirken und somit zu einem Verkippen der Antriebswelle 2 gegenüber der Antriebswellenlängsachse 4 führten. In einem solchen Fall erfahren die Randbereiche des Lagers eine hohe Belastung, die jedoch durch eine entsprechende elastische Verformung herabgesetzt werden kann.

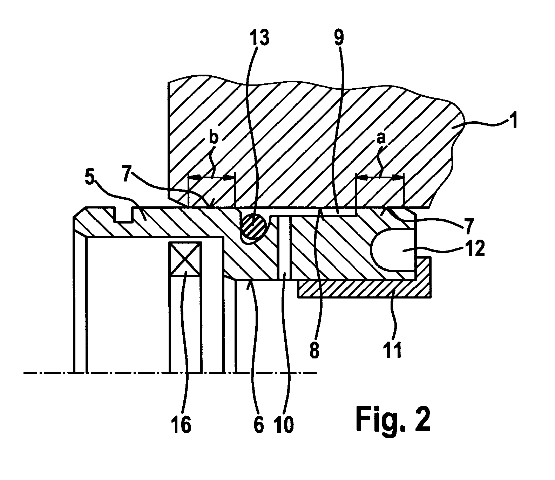

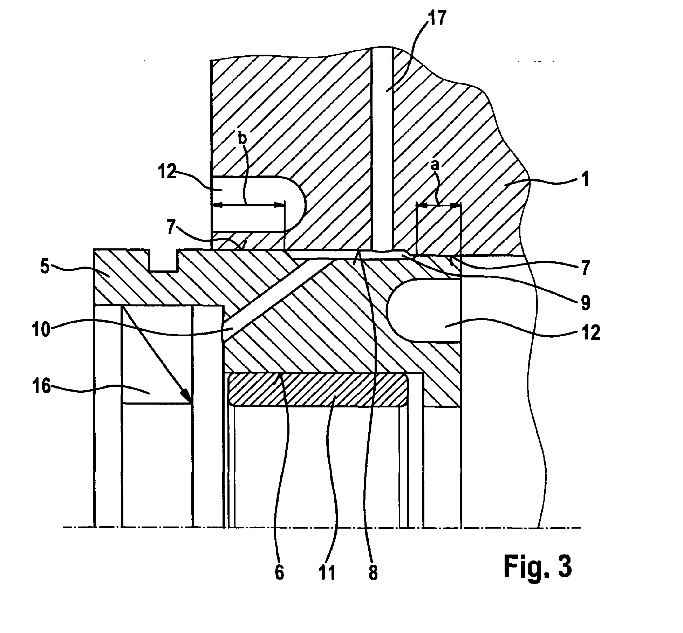

Eine erfidnungsgemäße Hochdruckpumpe entsprechend der Figuren 2 und 3 unterscheidet sich von der vorstehend beschriebenen Hochdruckpumpe dadurch, dass das Gehäuseteil 5 mit dem Pumpengehäuse 1 über eine Pressverbindung 7 reibschlüssig verbunden ist, wobei die reibschlüssige Pressverbindung dadurch hergestellt wird, dass das Gehäuseteil 5 in wenigstens einem Abschnitt a, b ein radiales Übermaß gegenüber der Ausnehmung 8 des Pumpengehäuses 1 besitzt, in welcher das Gehäuseteil 5 aufgenommen ist. Eine Verschraubung des Gehäuseteils 5 mit dem Pumpengehäuse 1 ist somit entbehrlich, so dass auch die Ausbildung eines Flansches 14 nicht erforderlich ist. Daduch wird Material und Gewicht eingespart. Das Gehäuseteil 5 der Ausführungsformen der Figuren 2 und 3 ist daher im Wesentlichen hohlzylinderförmig ausgebildet.

Gleichwohl die Ausbildung einer Pressverbindung 7 über lediglich einen ein radiales Übermaß aufweisenden Abschnitt a zur Befestigung des Gehäuseteils 5 am Pumpengehäuse 1 als ausreichend angesehen wird, wird die Ausführung mit zwei Pressverbänden aus den nachfolgend genannten Gründen bevorzugt.

Bei dem ersten, in Figur 2 dargestellten Ausführungsbeispiel weist das Gehäuseteil 5 zwei Abschnitte a und b auf, die gegenüber der Ausnehmung 8 des Pumpengehäuses 1 ein radiales Übermaß besitzen. Somit wird in den Abschnitten a und b jeweils eine Pressverbindung 7 hergestellt. Die Abschnitte a und b sind axial beabstandet zueinander am Gehäuseteil 5 angeordnet, so dass zwischen den Abschnitten a und b ein Ringraum 9 ausgebildet wird. Der Ringraum 9 dient als Rücklaufnut, um über eine Rücklaufbohrung 10 eine gewisse Lagerschmiermenge wieder einem Systemrücklauf (nicht dargestellt) zuzuführen. Bei dem Ausführungsbeispiel der Figur 2 ist die Rücklaufbohrung 10 als Radialbohrung ausgeführt. Gegenüber dem Pumpeninnenraum ist der Ringraum 9 durch die Pressverbindung 7 des Abschnitts a abgedichtet, dessen radiales Übermaß derart bemessen ist, dass die Pressverbindung 7 zugleich eine Dichtfunktion ausübt. Der Abschnitt b weist dagegen kein zur Ausübung einer Dichtfunktion ausreichendes axiales Übermaß auf, so dass der Ringraum 9 nach außen hin über einen Dichtring 13 abgedichtet wird. Ein solcher Dichtring 13 ist entbehrlich, wenn auch das radiale Übermaß des Abschnitts b gegenüber der Ausnehmung 8 des Pumpengehäuses 1 auf ein entsprechendes Maß angehoben wird. Die Abdichtung der Antriebswelle 2 gegenüber dem Gehäuseteil 5 übernimmt ein Wellendichtring 16.

Bei dem Ausführungsbeispiel der Figur 2 ist in die Lagerbohrung 6 des Gehäuseteils 5 eine Bundbuchse als Gleitlagerbuchse 11 eingesetzt. Um einer Verformung der Gleitlagerbuchse 11 aufgrund des Pressübermaßes des Abschnitts a entgegen zu wirken, weist das Gehäuseteil 5 in diesem Bereich eine stirnseitig eingebrachte Ringnut 12 auf, aufgrund derer sich der Randbereich des Gehäuseteils 5 elastisch verformen kann. Eine Verformung der Gleitlagerbuchse wird dadurch verhindert, so dass die Tragfähikeit des Lagers weiterhin gewährleistet ist.

Wie in dem zweiten Ausführungsbeispiel der Figur 3 gezeigt, kann eine Ringnut 12 auch an einer Stirnfläche des Pumpengehäuses 1 ausgebildet sein. Die Ringnut 12 kompensiert in dem vorliegenden Beispiel das Pressübermaß der Pressverbindung 7 des Abschnittes b, indem sie eine elastische Verformung des Pumpengehäuses 1 ermöglicht.

Das Ausführungsbeispiel der Figur 3 unterscheidet sich weiterhin von dem der Figur 2, indem die Gleitlagerbuchse 11 zylinderförmig und nicht als Bundbuchse ausgebildet ist. Um die Gleitlagerbuchse 11 in ihrer axialen Lage zu sichern, kann ein Bundbereich 18 am Gehäuseteil 5 ausgebildet sein. Ferner ist als weiteres Unterscheidungsmerkmal die Rücklaufbohrung 10 nicht als Radialbohrung, sondern schräg verlaufend ausgeführt. Über den Ringraum 10 steht die Rücklaufbohrung 10 in Verbindung mit einer Gehäusebohrung 17, die wiederum an den Systemrücklauf angeschlossen ist.

Die verschiedenen, in Zusammenhang mit den Ausführungsbeispielen der Figuren 2 und 3 beschriebenen Aussattungsmerkmale können jeweils alternativ oder in beliebiger Kombination zum Einsatz gelangen. Die Erfindung ist daher ausdrücklich nicht auf die dargestellten Ausführungsbeispiele beschränkt.

## Patentansprüche

1. Kraftstoffhochdruckpumpe einer Brennkraftmaschine mit einem Pumpengehäuse (1), in dem zur Betätigung wenigstens eines im Pumpengehäuse (1) angeordneten Pumpenelementes eine Antriebswelle (2) mit einem Nocken- oder Exzentertrieb (3) aufgenommen und drehbar um eine Antriebswellenlängsachse (4) gelagert ist, wobei das Pumpengehäuse (1) zur Aufnahme und drehbaren Lagerung der Antriebswelle (2) ein Gehäuseteil (5) mit einer Lagerbohrung (6) umfasst, das über eine reibschlüssige Pressverbindung (7) mit dem Pumpengehäuse (1) verbunden ist,
wobei das Gehäuseteil (5) einen ersten Abschnitt (a) und einen zweiten Abschnitt (b) mit radialem Übermaß gegenüber einer Ausnehmung (8) des Pumpengehäuses (1), in welche das Gehäuseteil (5) eingesetzt ist, zur Ausbildung der reibschlüssigen Pressverbindung (7) besitzt, wobei der erste Abschnitt (a) und der zweite Abschnitt (b) in axialer Richtung bezogen auf die Antriebswellenlängsachse (4) zueinander beabstandet sind,
**dadurch gekennzeichnet, dass** zwischen den beiden Abschnitten (a, b) ein Ringraum (9) als Rücklaufnut verbleibt, in den eine Rücklaufbohrung (10) mündet.

2. Kraftstoffhochdruckpumpe nach einem der vorhergehenden Ansprüche,
**dadurch gekennzeichnet, dass** sich das radiale Übermaß des ersten Abschnitts (a) und des zweiten Abschnitts (b) des Gehäuseteils (5) gegenüber der Ausnehmung (8) des Pumpengehäuses (1) unterscheidet, wobei vorzugsweise das radiale Übermaß des zweiten Abschnitts (b) größer gewählt ist.

3. Kraftstoffhochdruckpumpe nach einem der vorhergehenden Ansprüche,
**dadurch gekennzeichnet, dass** die Pressverbindung im Bereich des zweiten Abschnitts (b) zudem eine Dichtfunktion besitzt.

4. Kraftstoffhochdruckpumpe nach einem der vorhergehenden Ansprüche,
**dadurch gekennzeichnet, dass** zur Vermeidung einer Verformung der Lagerbohrung (6) des Gehäuseteils (5) oder einer in der Lagerbohrung (6) angeordneten Gleitlagerbuchse (11) im Pumpengehäuse (1) im Bereich wenigstens einer Pressverbindung (7) eine Ringnut (12) vorgesehen ist, die eine elastische Verformung des Pumpengehäuses (1) und damit eine Entkopplung im Bereich der Pressverbindung (7) bewirkt, wobei die Ringnut (12) vorzugsweise koaxial zur Ausnehmung (8) des Pumpengehäuses (1) angeordnet und mit einem kerbunempfindlichen Radius augestattet ist.

5. Kraftstoffhochdruckpumpe nach Anspruch 4,
**dadurch gekennzeichnet, dass** die axiale Erstreckung der Ringnut (12) im Pumpengehäuse (1) größer als die axiale Erstreckung des jeweiligen Abschnitts (a, b) mit radialem Übermaß gewählt ist, wobei die axiale Erstreckung der Ringnut (12) vorzugsweise mindestens 20% größer gewählt ist.

6. Krafttsoffhochdruckpumpe nach einem der vorhergehenden Ansprüche,
**dadurch gekennzeichnet, dass** zur axialen Lagesicherung des Gehäuseteils (5) innerhalb der Ausnehmung (8) des Pumpengehäuses (1) zusätzlich eine formschlüssige Verbindung des Gehäuseteils (5) mit dem Pumpengehäuse (1) vorgesehen ist.

7. Krafttsoffhochdruckpumpe nach einem der vorhergehenden Ansprüche,
**dadurch gekennzeichnet, dass** das Gehäuseteil (5) und das Pumpengehäuse (1) aus dem gleichen Werkstoff bestehen.

## Claims

1. High-pressure fuel pump of an internal combustion engine, having a pump housing (1) in which, for the actuation of at least one pump element arranged in the pump housing (1), a drive shaft (2) with a cam or eccentric drive (3) is accommodated and mounted so as to be rotatable about a drive shaft longitudinal axis (4), wherein the pump housing (1), for the accommodation and rotational mounting of the drive shaft (2), comprises a housing part (5) with a bearing bore (6) which is connected to the pump housing (1) by means of a frictionally locking press-fit connection (7),
wherein the housing part (5) has a first portion (a) and a second portion (b) with a radial oversize in relation to a recess (8), into which the housing part (5) is inserted, of the pump housing (1) in order to form the frictionally locking press-fit connection (7), wherein the first portion (a) and the second portion (b) are spaced apart from one another in an axial direction in relation to the drive shaft longitudinal axis (4),
**characterized in that** an annular chamber (9) into which a return bore (10) opens out remains, as a return groove, between the two portions (a, b).

2. High-pressure fuel pump according to Claim 1, **characterized in that** the radial oversize of the first portion (a) and of the second portion (b) of the housing part (5) in relation to the recess (8) of the pump housing (1) differ, wherein the radial oversize of the second portion (b) is preferably selected to be larger.

3. High-pressure fuel pump according to one of the preceding claims,
**characterized in that** the press-fit connection in the region of the second portion (b) also has a sealing function.

4. High-pressure fuel pump according to one of the preceding claims,
**characterized in that**, to prevent deformation of the bearing bore (6) of the housing part (5) or of a plain bearing bushing (11) arranged in the bearing bore (6), an annular groove (12) is provided in the pump housing (1) in the region of at least one press-fit connection (7), which annular groove effects an elastic deformation of the pump housing (1) and thus a decoupling in the region of the press-fit connection (7), wherein the annular groove (12) is preferably arranged coaxially with respect to the recess (8) of the pump housing (1) and is provided with a notch-insensitive radius.

5. High-pressure fuel pump according to Claim 4,
**characterized in that** the axial extent of the annular groove (12) in the pump housing (1) is selected to be greater than the axial extent of the respective portion (a, b) with a radial oversize, wherein the axial extent of the annular groove (12) is preferably selected to be at least 20% larger.

6. High-pressure fuel pump according to one of the preceding claims, **characterized in that**, for the axial securing of the housing part (5) in position within the recess (8) of the pump housing (1), a positively locking connection of the housing part (5) to the pump housing (1) is additionally provided.

7. High-pressure fuel pump according to one of the preceding claims, **characterized in that** the housing part (5) and the pump housing (1) are composed of the same material.

## Revendications

1. Pompe de carburant haute pression d'un moteur à combustion interne, comprenant un carter de pompe (1), dans lequel, pour l'actionnement d'au moins un élément de pompe disposé dans le carter de pompe (1), est reçu un arbre d'entraînement (2) avec un entraînement à came ou excentrique (3), lequel arbre d'entraînement est monté de manière rotative autour d'un axe longitudinal d'arbre d'entraînement (4), le carter de pompe (1) comprenant, pour recevoir et supporter à rotation l'arbre d'entraînement (2), une partie de carter (5) avec un alésage de palier (6), laquelle partie de carter est connectée au carter de pompe (1) par le biais d'une connexion par pressage à engagement par friction (7),
la partie de carter (5) présentant une première portion (a) et une deuxième portion (b) avec un surdimensionnement radial par rapport à un évidement (8) du carter de pompe (1), dans lequel évidement est insérée la partie de carter (5), pour réaliser la connexion par pressage à engagement par friction (7), la première portion (a) et la deuxième portion (b) étant espacées l'une de l'autre dans la direction axiale par rapport à l'axe longitudinal de l'arbre d'entraînement (4),
**caractérisée en ce qu'entre** les deux portions (a, b) subsiste un espace annulaire (9) en tant que rainure de retour, dans laquelle débouche un alésage de retour (10).

2. Pompe de carburant haute pression selon la revendication 1, **caractérisée en ce que** le surdimensionnement radial de la première portion (a) et de la deuxième portion (b) de la partie de carter (5) par rapport à l'évidement (8) du carter de pompe (1) est différent, le surdimensionnement radial de la deuxième portion (b) étant choisi de préférence supérieur.

3. Pompe de carburant haute pression selon l'une quelconque des revendications précédentes,
**caractérisée en ce que** la connexion par pressage dans la région de la deuxième portion (b) possède en outre une fonction d'étanchéité.

4. Pompe de carburant haute pression selon l'une quelconque des revendications précédentes,
**caractérisée en ce que** pour éviter une déformation de l'alésage de palier (6) de la partie de carter (5) ou d'une douille de palier lisse (11) disposée dans l'alésage de palier (6) dans le carter de pompe (1) dans la région d'au moins une connexion par pressage (7), il est prévu une rainure annulaire (12), qui provoque une déformation élastique du carter de pompe (1) et donc un désaccouplement dans la région de la connexion par pressage (7), la rainure annulaire (12) étant disposée de préférence coaxialement à l'évidement (8) du carter de pompe (1) et étant munie d'un rayon insensible aux entailles.

5. Pompe de carburant haute pression selon la revendication 4,
**caractérisée en ce que** l'étendue axiale de la rainure annulaire (12) dans le carter de pompe (1) est choisie supérieure à l'étendue axiale de la portion respective (a, b) avec un surdimensionnement radial, l'étendue axiale de la rainure annulaire (12) étant choisie de préférence supérieure d'au moins 20 %.

6. Pompe de carburant haute pression selon l'une quelconque des revendications précédentes,
**caractérisée en ce que** pour la fixation en position axiale de la partie de carter (5) à l'intérieur de l'évidement (8) du carter de pompe (1), on prévoit en outre une connexion par engagement positif de la partie de carter (5) avec le carter de pompe (1).

7. Pompe de carburant haute pression selon l'une quelconque des revendications précédentes,
**caractérisée en ce que** la partie de carter (5) et le carter de pompe (1) se composent du même matériau.
